# EUROPÄISCHE PATENTANMELDUNG

(11) **EP 4 421 543 A2**
(43) Veröffentlichungstag der Anmeldung: **28.08.2024**
(21) Anmeldenummer: 24187925.3
(22) Anmeldetag: 07.05.2019
(51) Int. Cl.: G02B 5/124

(54) **RETROREFLEKTOR**

(30) Priorität: 20.07.2018 DE 102018117569
(62) Teilanmeldung aus: 19173004.3
(71) Anmelder: Gubela, Hans-Erich, 77876 Kappelrodeck (DE)
(72) Erfinder: Gubela, Hans-Erich, 77876 Kappelrodeck (DE)
(74) Vertreter: Patentanwälte Bregenzer und Reule Partnerschaftsgesellschaft mbB

(57) **Zusammenfassung**

Die Erfindung betrifft einenRetroreflektor (1, 101, 201, 301, 401, 501, 601, 701, 801, 901, 1001, 1101, 1201, 1301), umfassend eine regelmäßige Anordnung mehrerer reflektierender Tripel erster Art (3, 103, 203, 303, 403, 503, 903) mit jeweils drei Seitenflächen erster Art (5, 105, 205, 305, 405, 505, 7, 107, 207, 307, 407, 507, 9, 109, 209, 309, 409, 509), die paarweise annähernd senkrecht aufeinander stehen und eine Würfelecke mit einem Apex (11, 111, 211, 311, 411) definieren, in dem sich die durch die drei Seitenflächen erster Art (5, 105, 205, 305, 405, 505, 7, 107, 207, 307, 407, 507, 9, 109, 209, 309, 409, 509) aufgespannten Ebenen schneiden. Erfindungsgemäß ist vorgesehen, dass eine Anzahl ausgewählter Tripel erster Art jeweils eine insbesondere würfelförmige Ausnehmung (15, 115, 215, 415, 1215) in der Oberfläche der zugehörigen Würfelecke und/oder eine aus der Oberfläche der zugehörigen Würfelecke vorstehende insbesondere würfelförmige Erhebung aufweisen, die ein Tripel zweiter Art (17, 117, 217, 317, 417, 517 817, 917, 1217) bildet, wobei die Tripel zweiter Art (17, 117, 217, 317, 417, 517 817, 917, 1217) jeweils mindestens drei paarweise annähernd senkrecht aufeinanderstehende Seitenflächen zweiter Art (19, 119, 219, 319, 419, 619, 21, 121, 221, 321, 421, 23, 123, 223, 323, 423) aufweisen.

## Beschreibung

Die Erfindung betrifft einen Retroreflektor, der unter anderem zur Kennzeichnung und zur Verwendung in Sicherheitselementen geeignet ist.

Unter Retroreflektor sollen optische Elemente verstanden werden, die in einem bestimmten Winkelbereich einfallendes Licht unabhängig vom exakten Einfallswinkel wieder zurück zur Lichtquelle zurücklenken. Gewisse Abweichungen des zurückreflektierten Strahles von der Einfallsrichtung sind dabei möglich und teilweise sogar erwünscht, wenn zum Beispiel Lichtquelle und intendierter Rezipient der reflektierten Strahlung nicht in einer exakten Flucht vom Reflektor aus betrachtet sind.

Es sind verschiedene Arten von Retroreflektoren bekannt. Einen bekannten Typ von reflektierenden oder genauer gesagt retroreflektierenden Elementen stellen beispielsweise Folien mit eingebetteten Mikrokugeln vor einer spiegelnden Schicht dar. Im Allgemeinen einen deutlich höheren Retroreflektions- und damit Wirkungsgrad als solche Mikrokugel basierten Folien weisen reflektierende Elemente auf, die ein oder mehrere Cube-Corner-Elemente zur Retroreflektion umfassen. Eine solche Cube-Corner ("Würfelecke") besteht dabei aus drei jeweils im Wesentlichen senkrecht zueinanderstehenden Flächen und wird daher auch Tripel genannt. Ein entsprechender Retroreflektor umfasst dabei im Allgemeinen eine Vielzahl solcher Tripel, die regelmäßig also in einem Array angeordnet sind. Die regelmäßige Anordnung zur Bildung eines Cube-Corner-Reflektors wird als Tripelarray bezeichnet.

Stehen dabei die drei Tripelflächen nicht exakt senkrecht zueinander, so wird die Richtung zumindest eines Teiles des reflektierten Lichtes von der Richtung des einfallenden Lichtes um einen gewissen Betrag abweichen. Dieser Effekt ist beispielsweise im Artikel "Study of Light Deviation Errors in Triple Mirrors and Tedrahedral Prisms" von P. R. Yoder, Journal of the optical society of America, Vol. 48, Nr. 7, Seiten 496 - 499, Juli 1958 beschrieben. Eine Abweichung vom rechten Winkel kann aber für gewisse Anwendungen, wie Weitwinkelstrukturen im Straßenverkehr oder zur Lichtumlenkung, von Vorteil sein.

In vielen Anwendungen bestehen die Tripel aus Tetraederstrukturen (zum Beispiel US3810804 A Anmelder: Rowland dev. Corp), Das heißt, aus halben Würfeln, die entlang einer Diagonalen abgeschnitten sind. Solche Pyramidenstrukturen, haben den Nachteil, dass sie aufgrund von Totflächen, das heißt, Flächen, deren reflektierte Strahlen nicht weiter reflektiert werden können einen maximalen Wirkungsgrad von ca. 66 % haben.

Sehr häufig sind auch Anordnungen, bei der die drei im Wesentlichen jeweils zueinander senkrechten Flächen im Wesentlichen quadratisch und von gleicher Größe sind. Sie bilden dann eine Ecke (also 3 in einem Punkt zusammenstoßende Flächen) eines Würfels. Ein solcher spezieller Tripel soll im Folgenden als Full-Cube bezeichnet werden. Die Raumdiagonale dieses gedachten Würfels bildet die so genannte Tripelachse. Ist die Lichteintrittsfläche, auf die der Tripel beleuchtet wird, also die Aperturfläche senkrecht zur Tripelachse, so wird beim Full-Cube bei Lichteinfall parallel zur Tripelachse ideal 100% des einfallenden Lichts in die Ausgangsrichtung zurückreflektiert, was einen gro-βen Wirkungsgrad von mit diesen Tripeln ausgerüsteten Reflektoren zur Folge hat. Die Grundform der Full-Cube-Geometrie ist hexagonal. Als Grundform ist eine Projektion in eine Ebene zu verstehen, die von Vektoren aufgespannt wird, entlang derer die Tripel regelmäßig gitterartig angeordnet sind.

Eine weitere wichtige Geometrie von Retroreflektoren sind die Gubela-Tripel (siehe Fig.3 der DE 4236779 A1, Anmelder: Hans- Erich Gubela sen.). In der Geometrie der Gubela-Tripel ist eine erste Seitenfläche der Tripel durch eine längs aus einem Quader verlaufenden Hauptnut gebildet und die zweite und dritte Seitenfläche der Tripel durch eine Serie normal zu der ersten Seitenfläche und parallel zueinander verlaufenden Nebennuten. Die Gubela-Tripel-Geometrie hat eine rechteckige Grundform.

In letzter Zeit gibt es immer wieder Bedarf an Strukturen, die unterschiedliche Winkelbereiche der Reflektion abdecken, aber über den gesamten Reflektor ein einheitliches Erscheinungsbild haben. Andererseits ist es im Bereich der Sicherheitsanwendungen erwünscht, dass eine Struktur, wie ein Text oder ein bestimmtes Muster zumindest bei Beobachtung unter bestimmten Winkeln erscheint und bei Beobachtung unter einem zweiten Winkel sein Erscheinungsbild verändert.

Beides kann mit einem erfindungsgemäßen Retroreflektor erreicht werden. Der erfindungsgemäße Retroreflektor zeichnet sich dadurch aus, dass an einer vorgegebenen Stelle einiger ausgewählter Tripelelemente Ausnehmungen vorgesehen sind. Bevorzugt befinden sich die Ausnehmungen am Apex des entsprechenden Tripels, also an dem Punkt, an dem sich die drei durch die Seitenflächen des Tripels aufgespannten Ebenen schneiden. Die Ausnehmungen bilden die Tripel zweiter Art. Die Ausnehmungen basieren auf der Grundform eines Quaders. Die Quaderform kann jedoch durch Verdrehungen an den durch die Seitenflächen der Tripel erster Art aufgespannten Ebenen oder an Hilfsebenen der Tripelgeometrie abgeschnitten sein, weisen jedoch mindestens drei nahezu rechtwinklig aufeinanderstehende Seitenflächen auf. Vereinfachend wird hier von quaderartigen Tripeln zweiter Art gesprochen. Die Tripel zweiter Art sind daher ein Tripel im Tripel. Wenn die Tripel zweiter Art durch Ausnehmungen gebildet sind, arbeitet im Reflektor jeweils eine Seitenfläche des Tripels zweiter Art mit zwei Seitenflächen des zugehörigen Tripels erster Art zusammen. Die Seitenflächen der Tripel erster Art werden im folgenden auch als Seitenflächen erster Art, die Seitenflächen der Tripel zweiter Art als Seitenflächen zweiter Art bezeichnet.

Vorzugsweise sind mindestens zwei Kantenlängen der Tripel zweiter Art höchstens halb so groß wie die entsprechenden Kantenlängen der Tripel erster Art. Je kleiner die Kantenlängen der Tripel zweiter Art im Verhältnis zu den Kantenlängen der Tripel erster Art sind, desto besser ist die Effizienz des verbleibenden Retroreflektors. Daher ist es besonders vorteilhaft, wenn die Kantenlängen der Tripel zweiter Art höchstens ein Zehntel mal so groß sind wie die entsprechenden Kantenlängen der Tripel erster Art. Die Reflektionsleistung kann noch optimiert werden, wenn die Ausnehmungen ebenfalls würfelförmig sind. Das heißt, alle Kantenlängen der Tripel zweiter Art sind höchstens halb so groß, bevorzugt höchstens ein Zehntel mal so groß, wie die entsprechenden Kantenlängen der Tripel erster Art.

Die Erfindung kann sowohl in der Full-Cube-Geometrie als auch in der Gubela-Tripel-Geometrie als auch bei pyramidenförmigen Reflektoren ausgeführt werden. Beide Geometrien weisen dabei die höchste Reflektionsleistung auf.

In einer alternativen Ausgestaltung ist eine quaderartige Erhebung aus der Oberfläche der den Apex aufweisenden Würfelecke anstelle von oder zusätzlich zu Ausnehmungen vorgesehen. Die Erhebung ist bevorzugt in den Tiefpunkten eines Tripels erster Art angeordnet. Als Tiefpunkte werden diejenigen Punkte bezeichnet, bei denen sich mindestens drei Seitenflächen, von mindestens drei verschiedenen benachbarten Tripeln, beziehungsweise die Ebenen, die von diesen Seitenflächen aufgespannt werden, schneiden. Dort ist ein im Tripel erster Art vorgesehener Hohlraum mit Material teilweise ausgefüllt. In diesem Fall arbeiten dann alle drei Seitenflächen der Tripel zweiter Art miteinander zusammen, da die Tripel zweiter Art den gleichen Brechungsindex aufweisen, wie das Material des Retroreflektors.

Eine bevorzugte Herstellungsmethode eines erfindungsgemäßen Retroreflektors ist das Spritzgussverfahren. Für das Spritzgussverfahren wird ein Master verwendet, der aus einer Urform galvanisch abgeformt sein kann. Die Spritzgussform ist ein Negativ des erfindungsgemäßen Retroreflektors, die Urform kann ein Positiv des erfindungsgemäßen Retroreflektors sein. Die Spritzgussform hat die gleiche Grundstruktur wie der erfindungsgemäße Retroreflektor. Die Spritzgussform weist also auch eine regelmäßige Anordnung mehrerer reflektierender Tripel erster Art mit jeweils drei Seitenflächen auf. Die Seitenflächen sind würfelartig angeordnet. Damit die Seitenflächen des Retroreflektors näherungsweise senkrecht aufeinander stehen, müssen auch die Seitenflächen der Spritzgussform näherungsweise senkrecht aufeinander stehen. Seitenflächen, die zueinander einen Winkel zwischen 87° und 93°, bevorzugt zwischen 89° 50' und 90° 10' einschließen gelten als näherungsweise senkrecht aufeinander stehend.

Um im Apex des Reflektors Ausnehmungen zu formen, die Tripel zweiter Art bilden, sind in der negativen Spritzgussform in einem Tiefpunkt Erhebungen.

Eine weitere Möglichkeit zur Herstellung eines erfindungsgemäßen Retroreflektors ist der 3D-Druck. Der Werkstoff für den 3D-Druck muss dabei für den gewünschten Wellenlängenbereich transparent sein.

Die nachfolgenden vorteilhaften Weiterbildungen sind ohne Beschränkung der Allgemeinheit der Erfindung sowohl für das Werkzeug als auch für den Retroreflektor anwendbar.

Gemäß einer möglichen Ausgestaltung sind die Tripel zweiter Art quaderförmig. Die Tripel haben zum Beispiel eine rechteckige Grundfläche und eine lange Kante, die sich über die gesamte Kantenlänge des zugeordneten Tripels erster Art erstreckt.

Auch die Ausrichtung der Tripel zweiter Art kann je nach gewünschter Winkelverteilung dieser Tripel variiert werden. Die Ausrichtung kann einerseits so erfolgen, dass die Kanten der Tripel zweiter Art parallel zu den Kanten der zugehörigen Tripel erster Art verlaufen. Dies ist für Anwendungen ohne Winkelaufweitung vorteilhaft. Andererseits können die Tripel zweiter Art auch verkippt zu den Tripeln erster Art sein. Das heißt, mindestens eine Kante des Tripels zweiter Art schließt zu der entsprechenden Kante des Tripels erster Art einen Winkel ungleich 0° beziehungsweise 180 ° ein. Dabei sind Verkippungswinkel von wenigen Bogenminuten, zum Beispiel für Weitwinkelfunktionen genauso denkbar, wie Verkippungen in einem Winkelbereich von mehreren Grad, zum Beispiel für Sicherheitsanwendungen.

Bei Sicherheitsanwendungen können diejenigen Tripel erster Art, bei denen ein Tripel zweiter Art vorgesehen ist, nach einem vorbestimmten Muster ausgewählt werden. Das Muster erscheint dann auf dem erfindungsgemäßen Retroreflektor. Das Muster kann beispielsweise die Form eines Textes haben.

Geeignete Materialien zur Herstellung eines erfindungsgemäßen Retroreflektors sind alle Materialien, die beim gewünschten Wellenlängenbereich transparent sind. Beispielsweise kommen die Materialien Polymethylmethacrylat (PMMA), Polycarbonat (PC) oder ein optisches Silikon (liquid silicone rubber) in Betracht.

Die nachfolgenden Figuren sollen verschiedene Ausführungsformen ohne Beschränkung der Allgemeinheit der Erfindung verdeutlichen. Es zeigen:
Figur 1 die Struktur eines erfindungsgemäßen Retroreflektors in einer hexagonalen Grundform.
Figur 2 ein Reflektionsbild der Struktur nach Figur 1.
Figur 3 eine Abwandlung eines erfindungsgemäßen Retroreflektors nach Figur 1.
Figur 4 eine weitere Abwandlung eines erfindungsgemäßen Retroreflektors nach Figur 1.
Figur 5 das Reflektionsmuster eines Retroreflektors nach Figur 4.
Figur 6 die Struktur eines erfindungsgemäßen Retroreflektors in einer hexagonalen Grundform mit den Tripeln zweiter Art in den Tiefpunkten.
Figur 7 die Struktur eines erfindungsgemäßen Retroreflektors in einer weiteren Geometrie mit recheckiger Grundfläche.
Figur 8 die Struktur in der Geometrie nach Figur 7 mit den Tripeln zweiter Art in den Tiefpunkten der Geometrie in einer Ansicht von Oben
Figur 9 die Struktur nach Figur 8 in einer zweiten Ansicht
Figur 10 und 11 eine ähnliche Struktur wie in Figur 8 mit zueinander gespiegelten Strängen.
Figur 12 die Struktur nach Figur 8, bei der sich die Tripel zweiter Art über den gesamten Vertex der Nebennuten erstrecken.
Figur 13 einen erfindungsgemäßen Retroreflektor mit optischen Mikrostrukturen auf einer Seitenfläche eines Tripels zweiter Art.
Figur 14 und 15 zwei Ansichten eines Weitwinkelretroreflektors mit Tripeln zweiter Art in der Spitze.
Figur 16 eine Struktur eines erfindungsgemäßen Retroreflektors, bei dem die Tripel zweiter Art ein Muster bilden
Figur 17 eine weitere Ebene der Verschachtelung
Figur 18 eine Struktur eines erfindungsgemäßen Retroreflektors in der Pyramidengeometrie
Figur 19 eine Anordnung, bei der ein Teil des Strahls in eine andere Richtung umgelenkt wird, der größte Teil des Lichts aber Retroreflektiert wird
Figur 20 eine Ansicht von oben einer Retroreflektorstruktur, bei der der Tripel zweiter Art an einer beliebigen Stelle des Tripels erster Art angeordnet ist
Figur 21 die Struktur nach Figur 20 in einer weiteren Ansicht
Figur 22 eine Retroreflektorstruktur ähnlich wie in Figur 20, bei der die Tripel zweiter Art als Ausnehmung ausgebildet sind
Figur 23 eine zweite Ansicht der Struktur nach Figur 22
Figur 24 eine Retroreflektorstruktur bei der die Ausnehmung durch Verkippen des Quaders die Form einer Pyramide hat und an einer beliebigen Stelle angeordnet ist Figur 25 eine zweite Ansicht der Retroreflektorstruktur nach Figur 24.

### Im Detail zeigen:

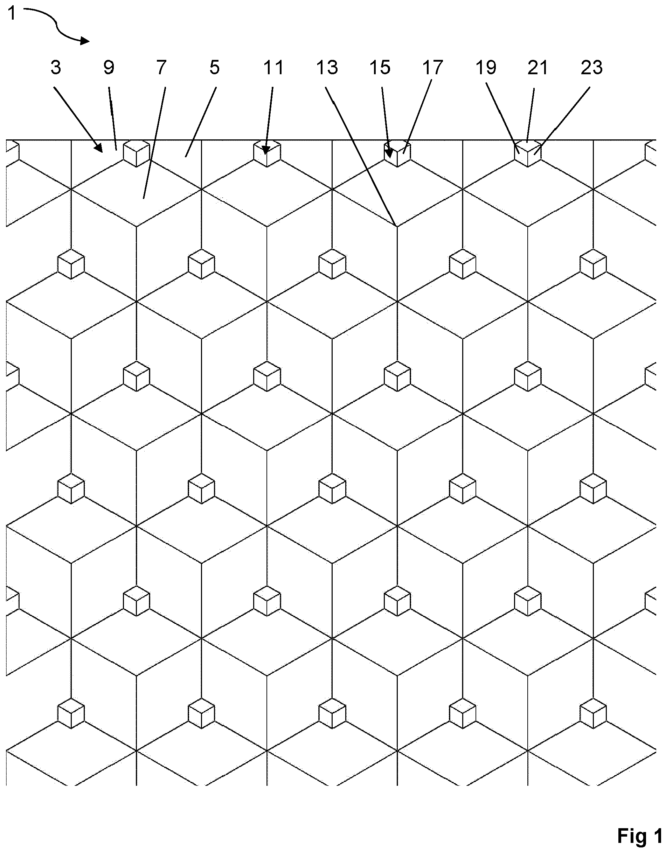

**Figur 1** die Struktur eines erfindungsgemäßen Retroreflektors 1 mit einer regelmäßigen Anordnung von Tripeln erster Art 3. In Figur 1 ist eine Anordnung in hexagonaler Full-Cube-Geometrie dargestellt. Die Erfindung lässt sich jedoch auch in anderen Geometrien wie der Pyramidenstruktur oder der Gubela-Tripel-Geometrie verwirklichen. Jeder Tripel erster Art weist drei Seitenflächen erster Art, nämlich eine erste Seitenfläche 5, eine zweite Seitenfläche 7 und eine dritte Seitenfläche 9 auf. Die Seitenflächen erster Art 5,7,9 stehen paarweise näherungsweise senkrecht, also in einem Winkelbereich zwischen 87° und 93°, aufeinander, bevorzugt in einem Winkelbereich zwischen 89° 50' und 90° 10`. Die von den Seitenflächen erster Art 5,7,9 aufgespannten Ebenen schneiden sich in einem Apex 11.

Am Apex 11 jedes Tripels erster Art 3 ist eine würfelförmige Ausnehmung 15 vorgesehen. Diese Ausnehmung 15 bildet einen Tripel zweiter Art 17. Jeder der Tripel zweiter Art 17 weist drei Seitenflächen zweiter Art 19, 21, 23 auf, die zueinander paarweise näherungsweise senkrecht stehen. Insbesondere ist die erste Seitenfläche 19 des Tripels zweiter Art 17 näherungsweise parallel zur ersten Seitenfläche 5 des entsprechenden Tripels erster Art 3; die zweite Seitenfläche 21 des Tripels zweiter Art 17 ist näherungsweise parallel zur entsprechenden zweiten Seitenfläche 7 und die dritte Seitenfläche 23 des Tripels zweiter Art 17 ist näherungsweise parallel zur entsprechenden dritten Seitenfläche 9 des Tripels erster Art 3. Näherungsweise parallel bedeutet, dass sich die Seitenflächen, beziehungsweise ihre gedachten Verlängerungen, in einem Winkel kleiner 1°, vorzugsweise kleiner 10`, schneiden würden.

In den Tiefpunkten 13, an denen sich drei benachbarte Tripel erster Art 3 berühren, sind im Ausführungsbeispiel der Figur 1 keine weiteren Strukturen vorgesehen.

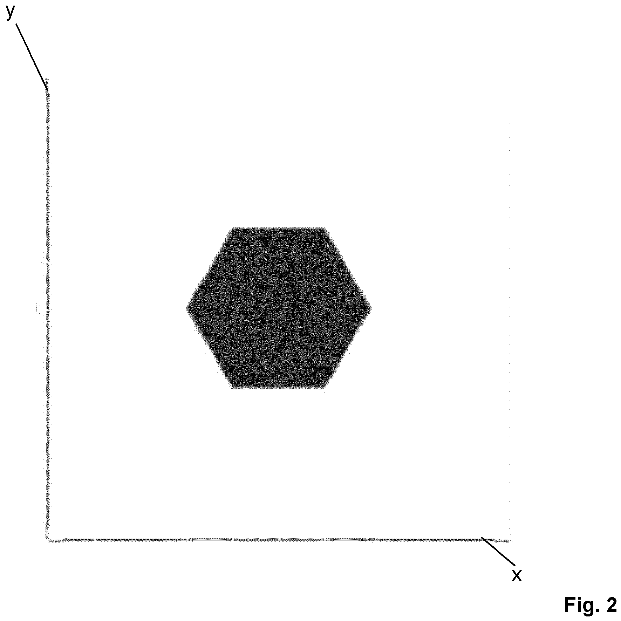

**Figur 2** das Reflektionsbild eines einzelnen Tripels eines Retroreflektors aus Figur 1 im ortaufgelösten Nahfeld. Dabei sind die Achsen x und y senkrecht zur nicht dargestellten optischen Hauptachse Die hexagonale Struktur des Retroreflektors ist deutlich zu erkennen und die Reflektion erfolgt homogen über die gesamte ausgefüllte Fläche.

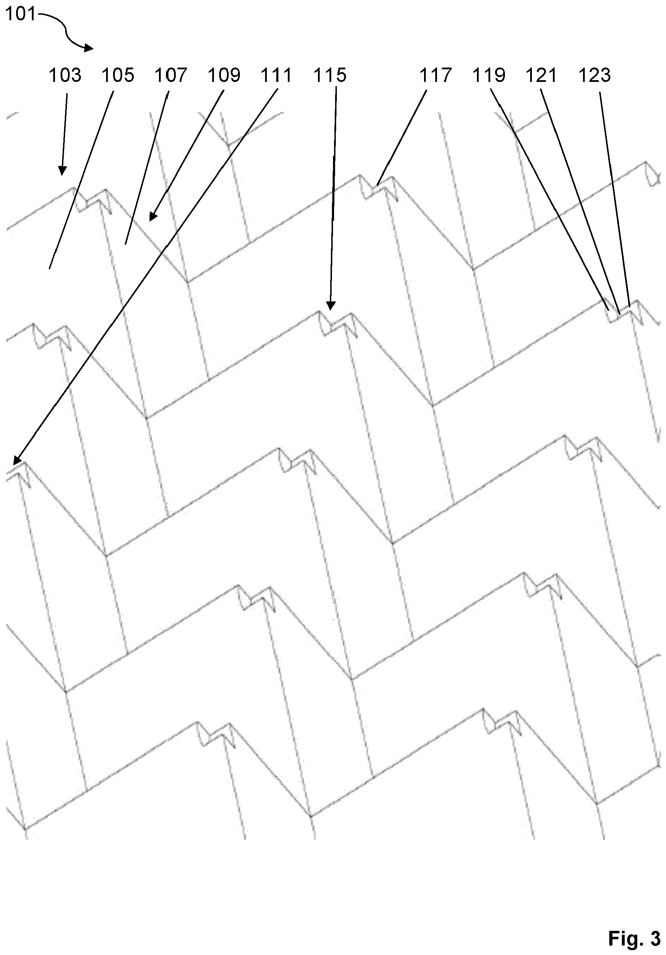

**Figur 3** eine erste Abwandlung eines erfindungsgemäßen Retroreflektors 101. Die Tripel erster Art 103 haben wie die Tripel aus Figur 1 eine kubische Form mit drei Seitenflächen erster Art 103, 105, 107. Am Apex 111 jedes Tripels ist wieder eine Ausnehmung 115 vorgesehen. Diese Ausnehmung 115 bildet einen Tripel zweiter Art 117 mit drei nahezu senkrecht aufeinanderstehenden Seitenflächen zweiter Art 119, 121, 123. Jedoch weist im Unterschied zum Retroreflektor 1 gemäß der Ausführungsform nach Figur 1 die Seitenfläche 119 eine gekrümmte Oberfläche auf. Diese gekrümmte Oberfläche sorgt für eine gerade Linie im Reflektionsbild. Bei zwei gekrümmten Seitenflächen der Tripel zweiter Art 117 hätte das Reflektionsbild die Form eines Kreuzes.

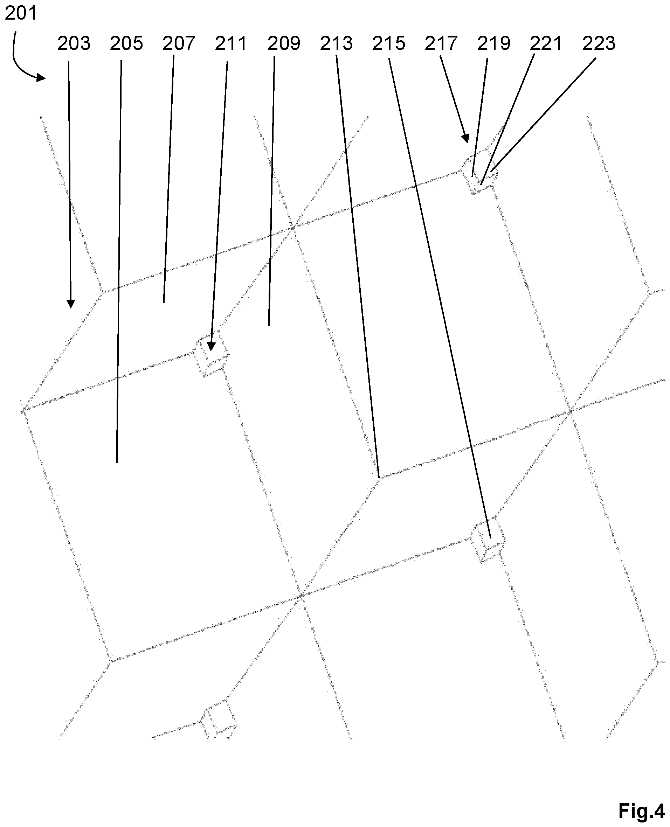

**Figur 4** eine zweite Abwandlung eines erfindungsgemäßen Retroreflektors 201 mit einer regelmäßigen Anordnung von Tripeln erster Art 203, die jeweils drei nahezu senkrecht aufeinanderstehenden Seitenflächen erster Art 205, 207, 209 aufweisen. Im Apex 211 der Tripel sind wieder Ausnehmungen 215 vorgesehen, die Tripel zweiter Art bilden. Die Tripel zweiter Art sind um einen Winkel um eine Achse, die durch den Apex 211 verläuft und sich entlang einer Normalen zu einer nicht dargestellten Lichteintrittsfläche des Retroreflektors 201 erstreckt, im Vergleich zur Ausrichtung gemäß Figur 1 verdreht.

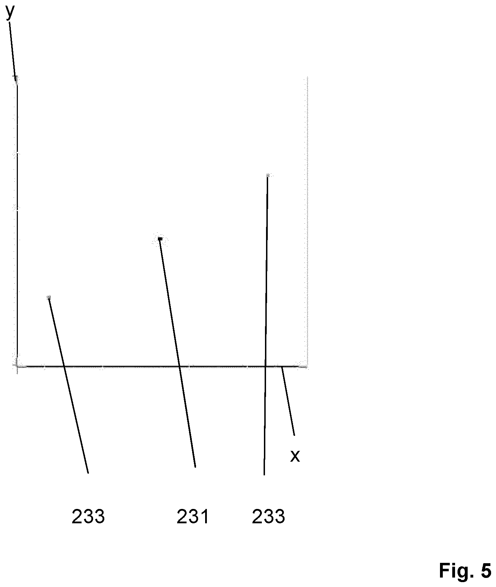

**Figur 5** ein Reflektionsbild des Retroreflektors 201 nach Figur 4. Die großen Tripel erster Art verursachen einen intensiven Hauptreflektionspunkt 231. Der Hauptreflektionspunkt 231 liegt genau in der Retroreflektionsachse. Die Tripel zweiter Art, von denen jede Seitenfläche zweiter Art mit zwei anderen Seitenflächen der Tripel erster Art zusammenarbeitet und zu den Seitenflächen der Tripel erster Art einen Winkel ungleich 90 ° einschließt, verursachen zwei lichtschwächere Nebenreflektionspunkte 233. Die Nebenreflektionspunkte 233 sind sowohl entlang der x-Achse x als auch entlang der y-Achse y verschoben und haben ein Symmetriezentrum im Ursprung, beziehungsweise im Hauptreflektionspunkt 233. Dieses Reflektionsbild der Nebenreflektionspunkte entspricht dem Bild eines kleinen Retroreflektors, bei dem zwei Seitenflächen zueinander nicht exakt einen Winkel von 90 ° einschließen, jedoch zu einer dritten Seitenfläche einen exakten rechten Winkel bilden (vgl. zum Beispiel P.R. Yoder in "Study of light deviation errors in triple mirrors and tetrahedral prisms" Journal of the optical society of America vol 48, Nr. 7 Juli 1958).

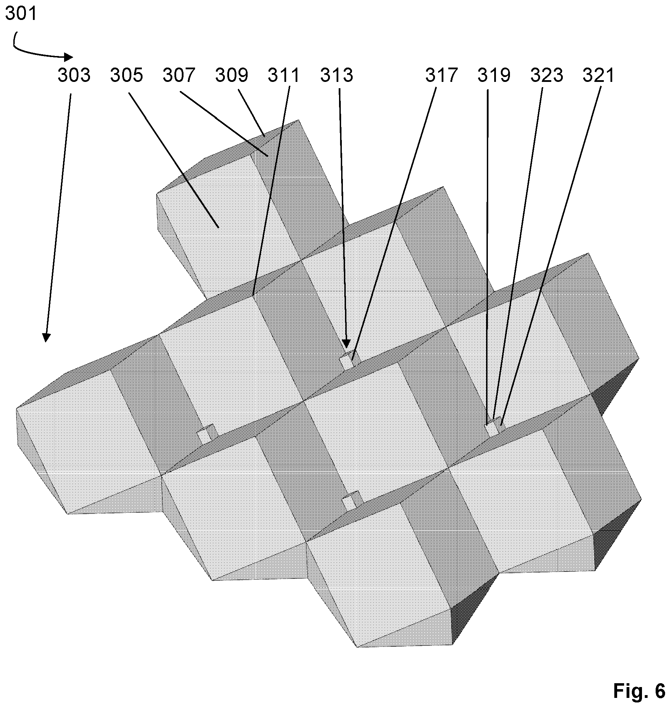

**Figur 6** eine Ausführungsform eines erfindungsgemäßen Retroreflektors 301, bei dem die Tripel zweiter Art 317 als aus den durch die Seitenflächen erster Artaufgespannten Ebenen vorstehende Erhebungen in den Tiefpunkten 313 der Tripel erster Art 303 vorgesehen sind. Die Seitenflächen 305, 307, 309 des Tripels erster Art 303 verlaufen parallel zu den entsprechenden Seitenflächen 319, 321, 323 des Tripels zweiter Art 317. In diesem Ausführungsbeispiel können die Seitenflächen 319, 321, 323 der Tripel zweiter Art 317 auch untereinander zusammenarbeiten. Das heißt, reflektiertes Licht, das in einen Bereich des Retroreflektors 301 mit Tripeln zweiter Art eingestrahlt wird, trifft auf seinem Lichtweg bei der Retroreflektion auf drei Seitenflächen eines Tripels zweiter Art anstatt wie bei den vorherigen Ausführungsbeispielen auf zwei Seitenflächen eines Tripels erster Art und eine Seitenfläche eines Tripels zweiter Art. Dies liegt daran, dass die Tripel zweiter Art mit Material gefüllt sind und damit den gleichen Brechungsindex aufweisen wie die Tripel erster Art.

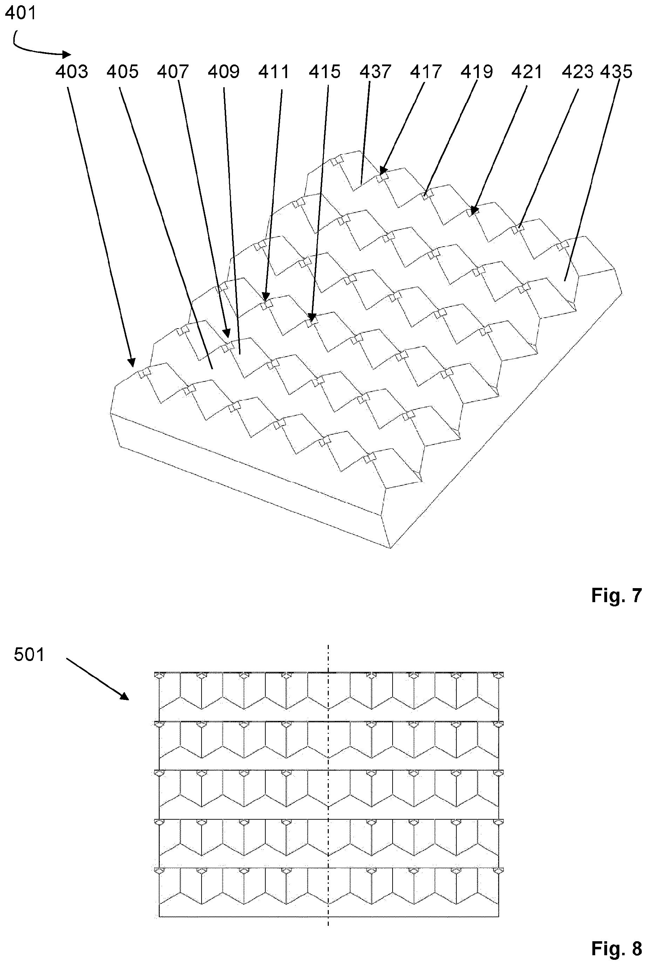

**Figur 7** einen erfindungsgemäßen Retroreflektor 401 in der Gubela-Tripel-Geometrie also einer Geometrie mit rechteckiger Grundfläche.

Eine Seitenfläche 405 der Tripel erster Art 403 ist durch die Hauptnute 435 der Geometrie definiert. Die Seitenflächen 407 und 409 werden durch zwei parallele Nebennuten 437 gebildet. In der Gubela-Tripel-Geometrie können die Tripel zweiter Art 417 wie dargestellt durch Ausnehmungen 415 im Apex 411 gebildet werden oder an einem unteren, also einem einer Lichteintrittsfläche des Retroreflektors zugewandten Ende der Nebennuten als quaderförmige Erhebungen ausgebildet sein. Auch in der Ausführungsform nach Figur 7 sind die in den vorherigen Figuren dargestellten Variationen der Seitenflächen 419, 421, 423 der Tripel zweiter Art 417 möglich.

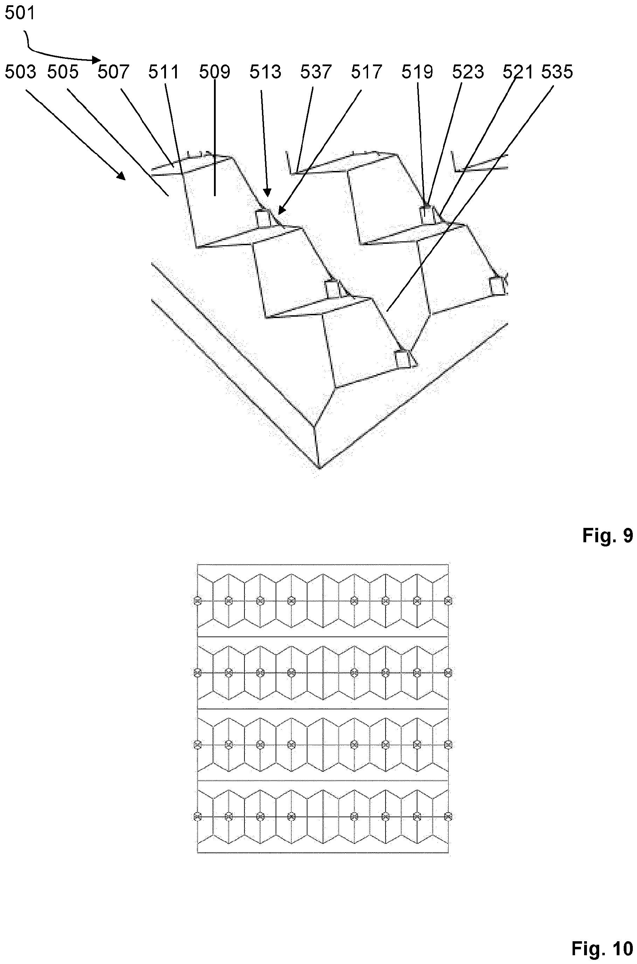

**Figur 8** **und** **Figur 9** zwei Ansichten einer weiteren Ausführungsform eines erfindungsgemäßen Retroreflektors 501 in der Geometrie mit rechteckiger Grundfläche. **Figur 8** zeigt dabei eine Ansicht von oben, **Figur 9** eine perspektivische Ansicht. Die Tripel zweiter Art 517 befinden sich als Erhebungen in den Tiefpunkten 513, also an einem unteren Ende der Nebennuten 537. Die Seitenflächen 519, 521, 523 des Tripels zweiter Art 517 sind jeweils parallel zu den entsprechenden Seitenflächen 505, 507, 509 des Tripels erster Art 503 ausgerichtet. Insbesondere die erste Seitenfläche 519 folgt in ihrer Ausrichtung der Grenzfläche der Hauptnut 535.

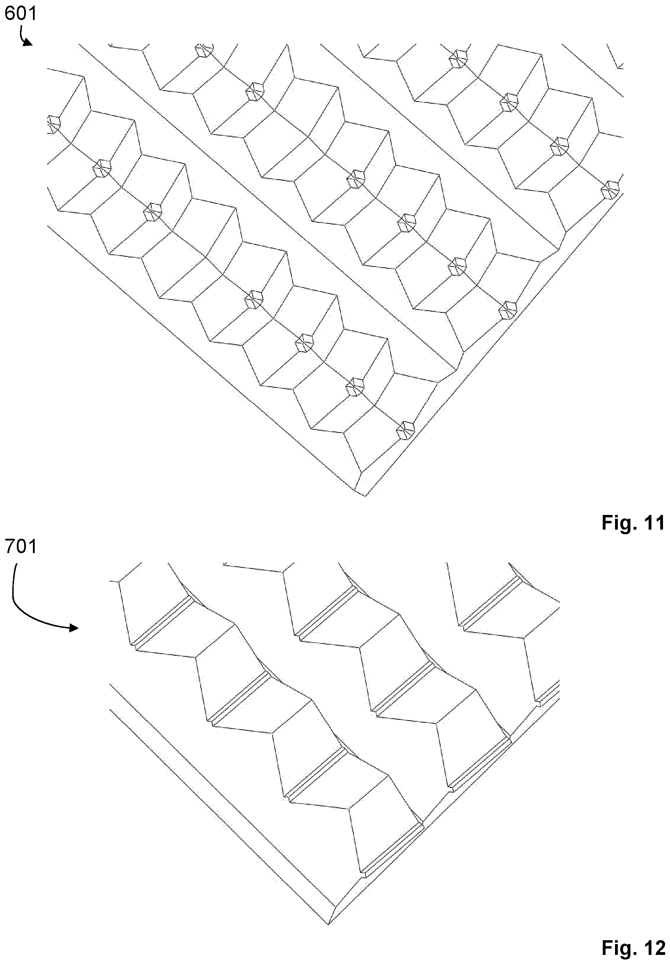

Die Ausführungsform des Retroreflektors 601 nach den **Figuren 10** **und** **11** basiert auf der vorherigen Ausführungsform. Jedoch sind dabei jeweils zwei benachbarte Stränge um 180° gegeneinander verdreht. Die Form von jeweils zwei zusammengefügten Tripeln zweiter Art ergibt sich dabei zu zwei schräg abgeschnittenen Quadern, die an der Schnittfläche spiegelsymmetrisch zusammengefügt sind.

**Figur 12** einen Retroreflektor 701, bei dem sich der Tripel zweiter Art über den gesamten Vertex der Nebennut erstreckt.

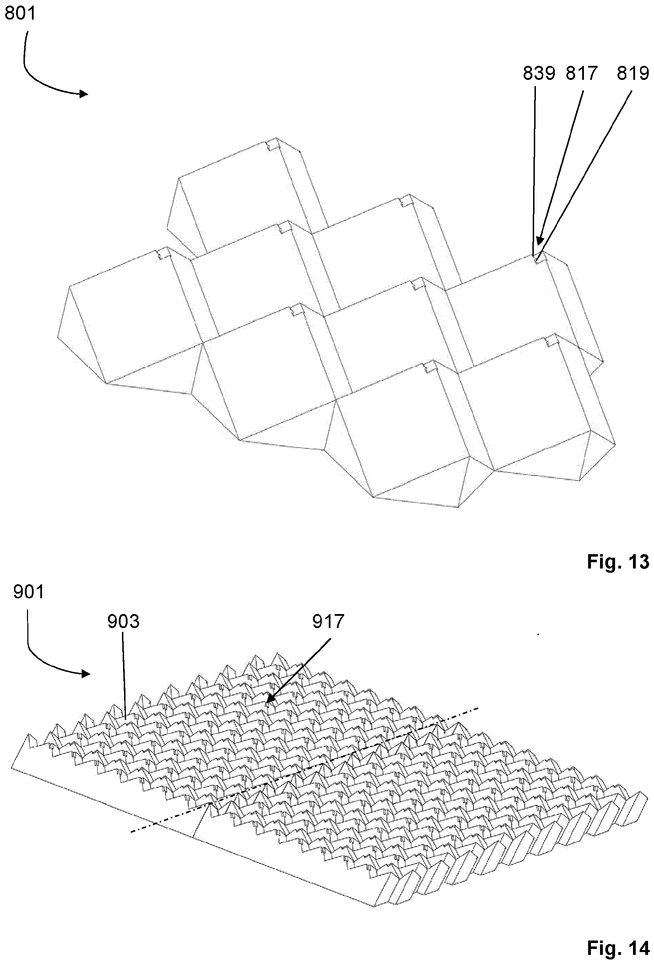

**Figur 13** eine Ausführungsform eines erfindungsgemäßen Retroreflektors 801 mit optischen Strukturen 839 in Form von Zylinderlinsen, die auf einer ersten Seitenfläche 819 eines Tripels zweiter Art angebracht sind. Die optische Struktur 839 nimmt in diesem Beispiel nur einen Bruchteil von weniger als einem Drittel des Flächeninhalts der ersten Seitenfläche 819 des Tripels zweiter Art 817 ein.

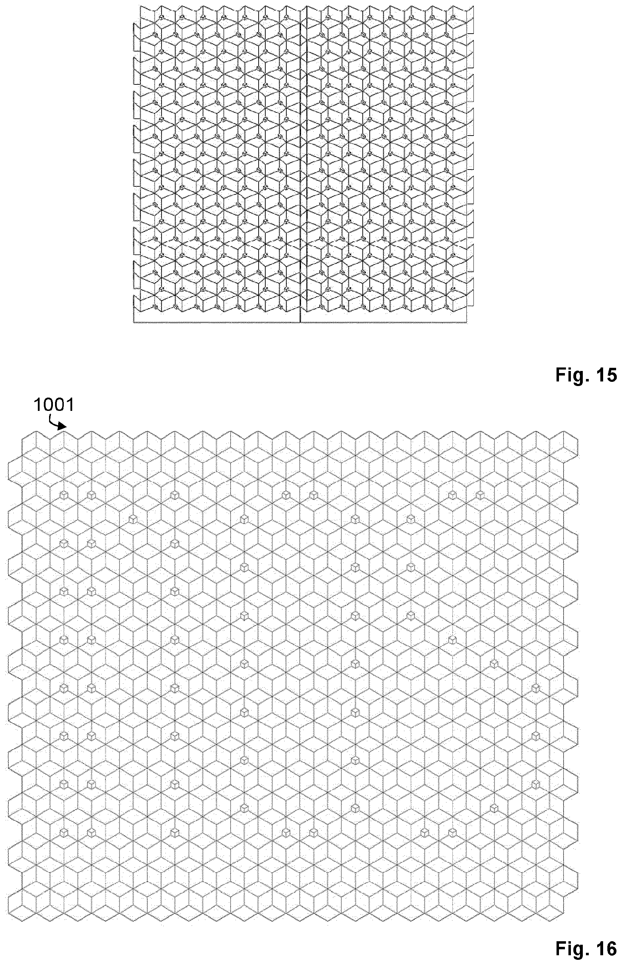

**Figuren 14** **und** **15** zwei Ansichten einer Ausführungsform eines erfindungsgemäßen Retroreflektors 901, bei dem die Grundform eine in der DE 102 165 79 A1 beschriebene Weitwinkelspiegelstruktur darstellt, in deren Apex die Tripel zweiter Art 917 als Ausnehmungen gebildet sind. Die Ausrichtung der Tripel zweiter Art 917 kann die Weitwinkeleigenschaft des Retroreflektors 901 zusätzlich zu ergänzenden Maßnahmen zum Beispiel zu einer spiegelsymmetrischen Anordnung der Tripel erster Art 903 noch verstärken.

**Figur 16** einen Retroreflektor 1001, dessen Tripel zweiter Art so angeordnet sind, dass sie den Schriftzug "IMOS" bilden. Die Tripel zweiter Art sind hier durchgehend als Ausnehmung im Apex mit ihren Seitenflächen jeweils parallel zu einer der Seitenflächen der Tripel erster Art ausgeführt. Jedoch lässt sich die Anordnung der Tripel zweiter Art beliebig mit anderen hier dargestellten Ausführungsformen kombinieren. Die Anordnung der Tripel zweiter Art in einem Muster ist auf Grund des spezifischen Reflektionsbildes besonders dazu geeignet, ein Sicherheitselement zu Erhöhung der Fälschungssicherheit von Dokumenten zu bilden.

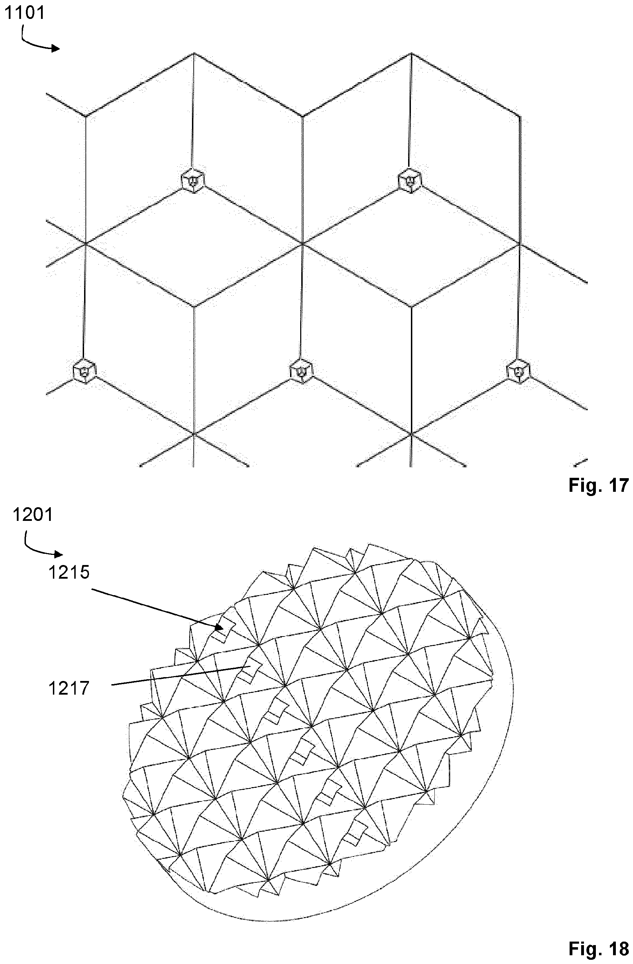

**Figur 17** einen Retroreflektor 1101 als ein Beispiel, bei dem in den als Ausnehmungen gebildeten Tripeln zweiter Art, Tripel dritter Art vorgesehen sind. Die Tripel dritter Art sind wiederum als Erhebungen ausgebildet, die aus den Seitenflächen zweiter Art vorspringen. Dies lässt sich theoretisch beliebig fortsetzten, sodass ein fraktalähnliches Gebilde entsteht. Allerdings treten bei immer kleineren Strukturen Beugungseffekte immer deutlicher zu Tage. Außerdem treffen deutlich weniger Lichtstrahlen auf die Tripel dritter Art als auf die Tripel erster Art, sodass die optischen Effekte dieser Strukturen sehr klein sind, gegenüber den Primäreffekten der Tripel erster Art. Alternativ ist es möglich, Erhebungen in Tiefpunkten als Tripel zweiter Art zu wählen, in deren Apices dann Ausnehmungen als Tripel dritter Art vorgesehen sind.

**Figur 18** einen Retroreflektor 1201, bei dem die Tripel erster Art aus Tetraedern bestehen. Der Reflektor hat also eine Pyramidengeometrie. Durch die quaderfömige Ausnehmung 1215 der Tripel zweiter Art 1217 wird aus einer Pyramidenspitze drei sich überschneidende kleinere Pyramiden.

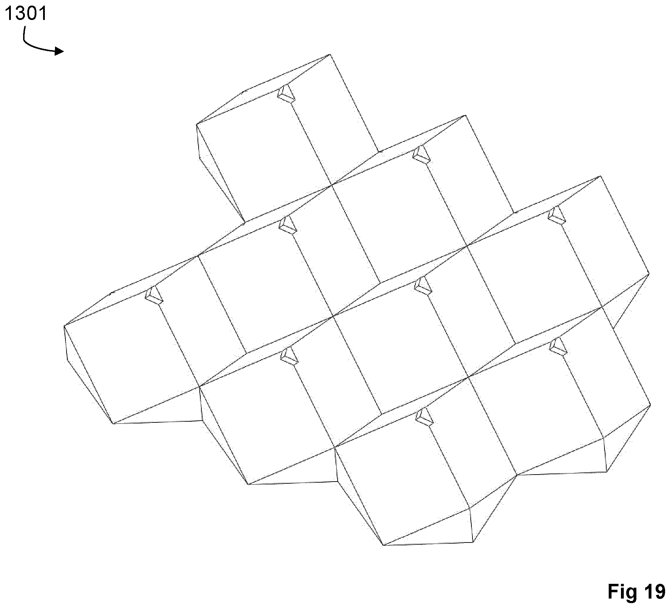

**Figur 19** einen Retroreflekor 1301, bei dem die Tripel zweiter Art so stark gegen die Tripel erster Art verkippt sind, dass das Licht an diesen Tripeln umgelenkt wird. Das meiste Licht wird also in die Einstrahlrichtung zurück reflektiert, aber der geringere Anteil des Lichts, der auf den Tripel zweiter Art fällt, wird in eine andere Richtung umgelenkt.

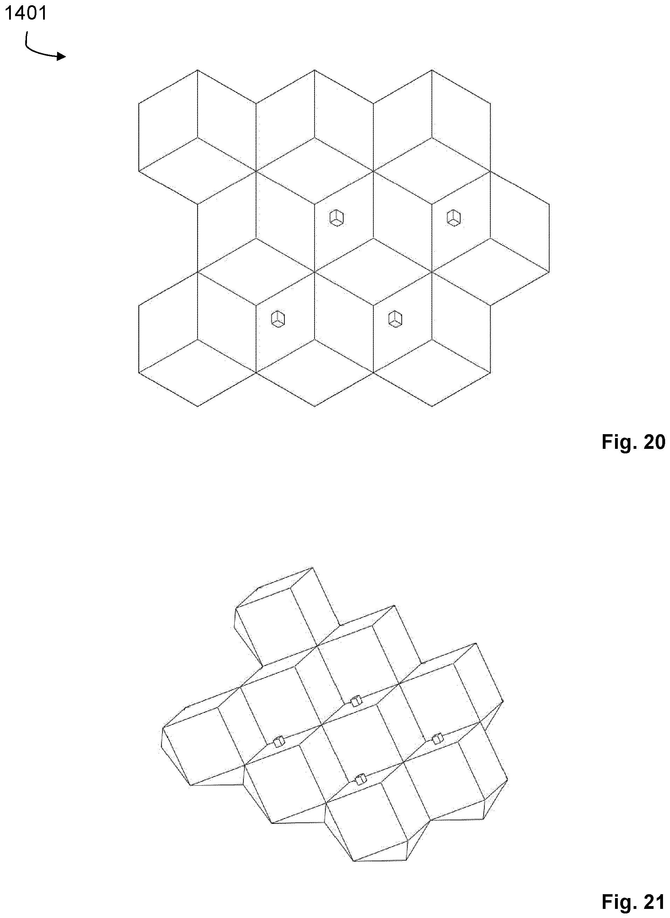

Die **Figuren 20 und 21** zwei Ansichten einer Ausführungsform eines erfindungsgemä-βen Retroreflektors 1401, bei der der Tripel zweiter Art als Erhebungen an beliebigen Stellen der Tripel erster Art angeordnet sind.

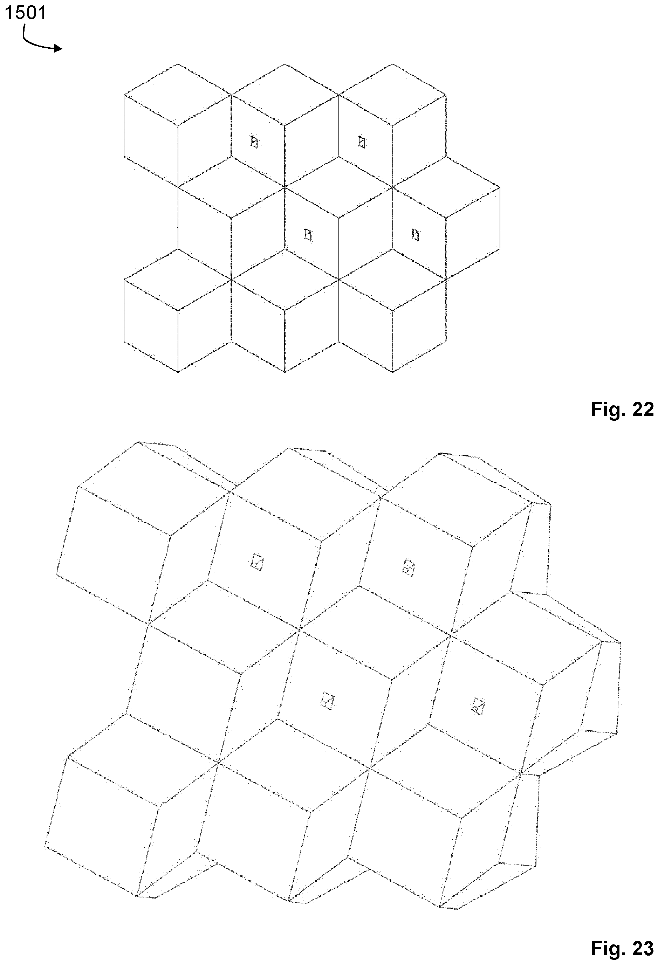

Die **Figuren 22 und 23** zwei Ansichten einer Ausführungsform eines erfindungsgemä-βen Retroreflektors 1501, bei der der Tripel zweiter Art als Ausnehmungen an beliebigen Stellen der Tripel erster Art angeordnet ist.

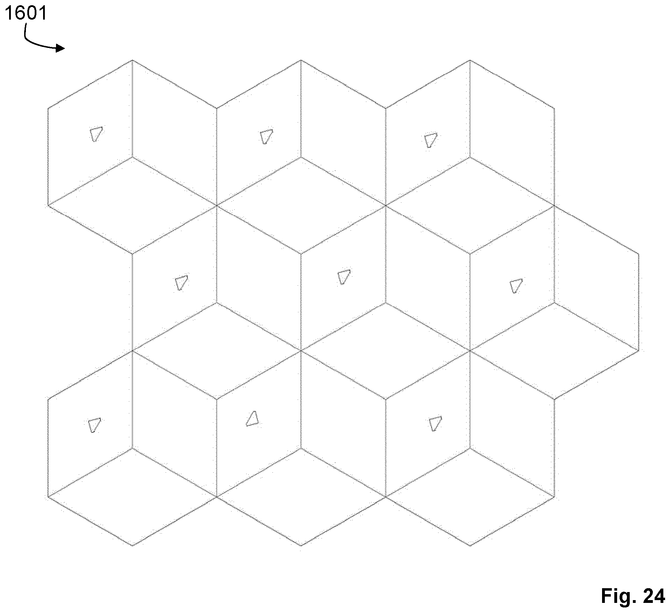

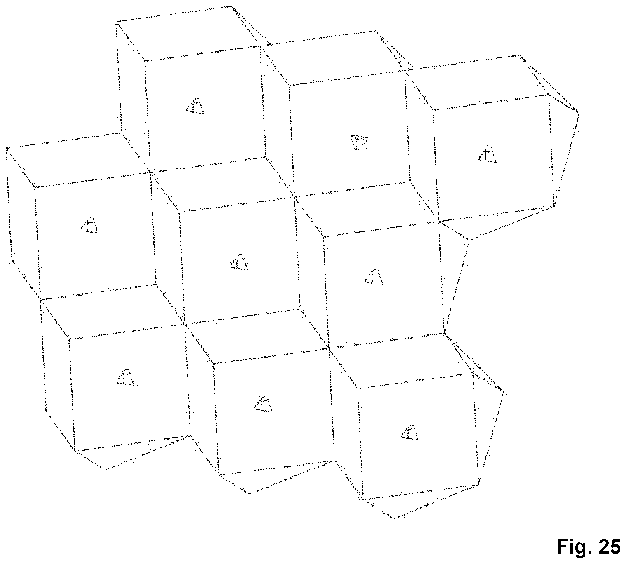

Die **Figuren 24** **und** **25** zwei Ansichten einer Ausführungsform eines erfindungsgemä-βen Retroreflektors 1601, bei der der Tripel zweiter Art als Ausnehmung in Form einer Pyramide, beziehungsweise an einer an seiner Diagonalebene abgeschnittenen Quaders ausgebildet sind und an einer beliebigen Stelle des Tripels erster Art angeordnet sind.

Der Fachmann versteht, dass sich die dargestellten Beispiele ohne Beschränkung der Allgemeinheit auch untereinander kombinieren lassen.

### Bezugszeichenliste

| | |
|---|---|
| 1, 101, 201, 301, 401, 501, 601, 701, 801, 901, 1001, 1101, 1201, 1301, 1401, 1501, 1601 | Retroreflektor |
| 3, 103, 203, 303, 403, 503, 903 | Tripel erster Art |
| 5, 105, 205, 305, 405, 505 | erste Seitenfläche der Tripel erster Art |
| 7, 107, 207, 307, 407, 507 | zweite Seitenfläche der Tripel erster Art |
| 9, 109, 209, 309, 409, 509 | dritte Seitenfläche der Tripel erster Art |
| 11, 111, 211, 311, 411 | Apex |
| 13, 213, 313, 513 | Tiefpunkt |
| 15, 115, 215, 415, 1215 | Ausnehmung |
| 17, 117, 217, 317, 417, 517 817, 917, 1217 | Tripel zweiter Art |
| 19, 119, 219, 319, 419, 619 | erste Seitenfläche der Tripel zweiter Art |
| 21, 121, 221, 321, 421 | zweite Seitenfläche der Tripel zweiter Art |
| 23, 123, 223, 323, 423 | dritte Seitenfläche der Tripel zweiter Art |
| 231 | Hauptreflektionspunkt |
| 233 | Nebenreflektionspunkt |
| 435, 535 | Hauptnut |
| 437, 537 | Nebennut |
| 839 | optische Struktur |
| x | x-Achse |
| y | y- Achse |

## Patentansprüche

1. Retroreflektor (1, 101, 201, 301, 401, 501, 601, 701, 801, 901, 1001, 1101, 1201, 1301), umfassend eine regelmäßige Anordnung mehrerer reflektierender Tripel erster Art (3, 103, 203, 303, 403, 503, 903) mit jeweils drei Seitenflächen erster Art (5, 105, 205, 305, 405, 505, 7, 107, 207, 307, 407, 507, 9, 109, 209, 309, 409, 509), die paarweise annähernd senkrecht aufeinander stehen und eine Würfelecke mit einem Apex (11, 111, 211, 311, 411) definieren, in dem sich die durch die drei Seitenflächen erster Art (5, 105, 205, 305, 405, 505, 7, 107, 207, 307, 407, 507, 9, 109, 209, 309, 409, 509) aufgespannten Ebenen schneiden, **dadurch gekennzeichnet, dass** eine Anzahl ausgewählter Tripel erster Art jeweils eine insbesondere würfelförmige Ausnehmung (15, 115, 215, 415, 1215) in der Oberfläche der zugehörigen Würfelecke und/oder eine aus der Oberfläche der zugehörigen Würfelecke vorstehende insbesondere würfelförmige Erhebung aufweisen, die ein Tripel zweiter Art (17, 117, 217, 317, 417, 517 817, 917, 1217) bildet, wobei die Tripel zweiter Art (17, 117, 217, 317, 417, 517 817, 917, 1217) jeweils mindestens drei paarweise annähernd senkrecht aufeinanderstehende Seitenflächen zweiter Art (19, 119, 219, 319, 419, 619, 21, 121, 221, 321, 421, 23, 123, 223, 323, 423) aufweisen.

2. Retroreflektor (1, 101, 201, 301, 401, 501, 601, 701, 801, 901, 1001, 1101, 1201, 1301, 1401, 1501, 1601) nach Anspruch 1, **dadurch gekennzeichnet, dass** der Retroreflektor (1, 101, 201, 301, 401, 501, 601, 701, 801, 901, 1001, 1101, 1201, 1301) aus mehreren Strängen zusammengesetzt ist, welche jeweils eine Hauptnute (535) und mehrere quer zur Hauptnute (535) verlaufende, zueinander parallele Nebennuten (537) aufweisen, wobei die Hauptnute (535) eine erste Seitenfläche (519) mehrerer Tripel erster Art (3, 103, 203, 303, 403, 503, 903) definiert und wobei die weiteren Seitenflächen (505, 507) jedes Tripels erster Art (3, 103, 203, 303, 403, 503, 903) jeweils durch eine Nebennute (537) gebildet werden.

3. Retroreflektor (1, 101, 201, 301, 401, 501, 601, 701, 801, 901, 1001, 1101, 1201, 1301, 1401, 1501, 1601) nach Anspruch 1 oder 2, **dadurch gekennzeichnet, dass** die Tripel zweiter Art (17, 117, 217, 317, 417, 517 817, 917, 1217) stets an derselben Stelle der ausgewählten Tripel erster Art (3, 103, 203, 303, 403, 503, 903) angeordnet sind.

4. Retroreflektor (1, 101, 201, 301, 401, 501, 601, 701, 801, 901, 1001, 1101, 1201, 1301, 1401, 1501, 1601) nach Anspruch 3, **dadurch gekennzeichnet, dass** die Ausnehmungen (15, 115, 215, 415, 1215) jeweils im Apex (11, 111, 211, 311, 411) des betreffenden Tripels erster Art (3, 103, 203, 303, 403, 503, 903) angeordnet sind und/oder dass die Erhebungen in Tiefpunkten (13, 213, 313, 513) zwischen Tripeln erster Art angeordnet sind, an denen sich die durch drei Seitenflächen erster Art (5, 105, 205, 305, 405, 505, 7, 107, 207, 307, 407, 507, 9, 109, 209, 309, 409, 509) dreier aneinander angrenzender Tripel erster Art (3, 103, 203, 303, 403, 503, 903) aufgespannten Ebenen schneiden.

5. Retroreflektor (1, 101, 201, 301, 401, 501, 601, 701, 801, 901, 1001, 1101, 1201, 1301, 1401, 1501, 1601) nach einem der Ansprüche 1 bis 3, **dadurch gekennzeichnet, dass** mindestens zwei Kantenlängen der Tripel zweiter Art (17, 117, 217, 317, 417, 517 817, 917, 1217) höchstens halb so groß, bevorzugt höchstens ein Zehntel mal so groß sind wie die entsprechenden Kantenlängen der Tripel erster Art (3, 103, 203, 303, 403, 503, 903).

6. Retroreflektor (1, 101, 201, 301, 401, 501, 601, 801, 901, 1001, 1101, 1201, 1301) nach Anspruch 5, **dadurch gekennzeichnet, dass** alle Kantenlängen der Tripel zweiter Art (17, 117, 217, 317, 417, 517 817, 917, 1217) höchstens halb so groß, bevorzugt höchstens ein Zehntel mal so groß sind wie die entsprechenden Kantenlängen der Tripel erster Art (3, 103, 203, 303, 403, 503, 903).

7. Retroreflektor (701) nach Anspruch 5, **dadurch gekennzeichnet, dass** eine dritte Kantenlänge der Tripel zweiter Art gleich groß ist wie eine entsprechende dritte Kantenlänge der Tripel erster Art.

8. Retroreflektor (1, 101, 301, 401, 501, 601, 701, 801, 901, 1001, 1101, 1201) nach einem der vorangehenden Ansprüche, **dadurch gekennzeichnet, dass** jede der Seitenflächen zweiter Art (19, 119, 319, 419, 619, 21, 121, 321, 421, 23, 123, 323, 423) zumindest eines Teils der Tripel zweiter Art (17, 117, 217, 317, 417, 517 817, 917, 1217) parallel zu einer der Seitenflächen (5, 105, 205, 305, 405, 505, 7, 107, 307, 407, 507, 9, 109, 309, 409, 509) erster Art ausgerichtet ist.

9. Retroreflektor (201, 1301) nach einem der Ansprüche 1 bis 7, **dadurch gekennzeichnet, dass** einige oder alle Tripel zweiter Art (217) zu den zugehörigen Tripeln erster Art (203) verkippt sind.

10. Retroreflektor (101) nach einem der vorangehenden Ansprüche, **dadurch gekennzeichnet, dass** eine, zwei oder alle drei der Seitenflächen zweiter Art (119, 121, 123) mindestens eines der Tripel zweiter Art (117) eine Wölbung aufweisen.

11. Retroreflektor (801) nach einem der vorangehenden Ansprüche, **dadurch gekennzeichnet, dass** eine, zwei oder alle drei der Seitenflächen zweiter Art (819) mindestens eines der Tripel zweiter Art (817) ein optisches Element (839), insbesondere zur Strahlaufweitung aufweisen, wobei das optische Element vorzugsweise höchstens ein Drittel des Flächeninhalts der Seitenflächen zweiter Art bedeckt und insbesondere eine Mikrolinse, eine Zylinderlinse, ein Polarisationsfilter oder ein Beugungsgitter ist.

12. Retroreflektor (1001) nach einem der vorangehenden Ansprüche, **dadurch gekennzeichnet, dass** die ausgewählten Tripel erster Art nach einem vorbestimmten Muster, das auf dem Retroreflektor (1001) erscheinen soll, wie z.B. einer Form oder einem Text, angeordnet sind.

13. Retroreflektor nach Anspruch 8 und Anspruch 12, **dadurch gekennzeichnet, dass** auch die Verkippung der Tripel zweiter Art nach einem vorbestimmten Muster ausgewählt ist.

14. Retroreflektor (1, 101, 201, 301, 401, 501, 601, 701, 801, 901, 1001, 1101, 1201, 1301) nach einem der vorherigen Ansprüche, **dadurch gekennzeichnet, dass** der Retroreflektor (1, 101, 201, 301, 401, 501, 601, 701, 801, 901, 1001, 1101, 1201, 1301) mittels Spritzguss aus einem der Materialien Polymethylmethacrylat (PMMA), Polycarbonat (PC), Silikon oder einem anderen bei sichtbarem Licht transparenten Kunststoff hergestellt ist.

15. Retroreflektor (1, 101, 201, 301, 401, 501, 601, 701, 801, 901, 1001, 1101, 1201, 1301) nach einem der Ansprüche 1 bis 13, **dadurch gekennzeichnet, dass** der Retroreflektor (1, 101, 201, 301, 401, 501, 601, 701, 801, 901, 1001, 1101, 1201, 1301) mittels eines 3-d-Druckers gedruckt ist, wobei eine zum Druck verwendete Druckgrundmasse derart ausgewählt ist, dass sie zumindest nach Aushärtung bei sichtbarem Licht transparent ist.

16. Spritzgussform zur Herstellung eines Retroreflektors nach einem der vorangehenden Ansprüche, **gekennzeichnet durch** eine Spritzgussformoberfläche, die ein Negativ der durch die Seitenflächen erster und zweiter Art (5, 105, 205, 305, 405, 505, 7, 107, 207, 307, 407, 507, 9, 109, 209, 309, 409, 509; 19, 119, 219, 319, 419, 619, 21, 121, 221, 321, 421, 23, 123, 223, 323, 423) gebildeten Reflexionsfläche ist.

17. Spritzgussform nach Anspruch 16, **dadurch gekennzeichnet, dass** sie mittels Mikroschneidens oder durch galvanische Abformung eines Mikroschnitts hergestellt ist, wobei jede ein Negativ für einen Tripel erster Art (3, 103, 203, 303, 403, 503, 903) und/oder jede ein Negativ für einen Tripel zweiter Art (17, 117, 217, 317, 417, 517 817, 917, 1217) darstellende Teilfläche der Spritzgussformoberfläche einzeln durch Mikroschneiden bearbeitet ist.

18. Verwendung eines Retroreflektors (1, 101, 201, 301, 401, 501, 601, 701, 801, 901, 1001, 1101, 1201, 1301) nach einem der Ansprüche 1 bis 15 in einem Sicherheitselement.
